# EUROPÄISCHE PATENTSCHRIFT

(11) **EP 0 786 322 B1**
(45) Veröffentlichungstag und Bekanntmachung des Hinweises auf die Patenterteilung: **15.11.2000**
(21) Anmeldenummer: 97100897.4
(22) Anmeldetag: 22.01.1997
(51) Int. Cl.: B29C 53/68, B29C 53/80

(54) **Vorrichtung zur Herstellung eines schlauch- oder rohrartigen Formkörpers aus einem faserverstärkten Reaktionsharz**
Apparatus for producing a hose- or tube like moulded object from a fibre reinforced reactive resin
Dispositif pour la production d'un corps moulé tubulaire en résine réactive renforcé par des fibres

(30) Priorität: 26.01.1996 DE 19602726
(43) Veröffentlichungstag der Anmeldung: 30.07.1997
(73) Patentinhaber: Plastobras Holding S.A., 5801 Hesperange (LU)
(72) Erfinder: Weigel, Jürgen, 99817 Eisenach (DE)
(74) Vertreter: Kossobutzki, Walter, Dipl.-Ing.(FH)

(56) Entgegenhaltungen:
- EP-A- 0 012 826
- EP-A- 0 211 535
- US-A- 4 494 436

## Beschreibung

Die Erfindung bezieht sich auf eine Vorrichtung zur Herstellung eines schlauch- oder rohrartigen Formkörpers aus einem mit mindestens einem Faserstrang verstärkten Reaktionsharz, bestehend aus mindestens einem um einen in axialer Richtung verschiebbaren Kern rotierenden Wickelkopf mit mindestens einer Vorratsrolle für den Faserstrang.

Aus der älteren Patentanmeldung DE-A-44 30 506 ist ein Verfahren zur Herstellung von rohrartigen Formteilen aus einem mit mindestens einem Faserstrang verstärkten Reaktionsharz bekannt, bei dem zunächst ein Kern aus einem mit einem gasförmigen Stützmedium beaufschlagten Folienschlauch gebildet wird. Dieser Folienschlauch kann entweder als vorgefertigter Schlauch vorliegen oder aus einem Folienband mit in Längsrichtung oder spiralförmig verlaufender Schweiß- oder Klebenaht gebildet werden. Auf diesen Kern wird zunächst eine Schicht aus einem Reaktionsharz aufgebracht, auf die dann mindestens ein spiralförmig verlaufender Faserstrang aufgewickelt wird. Nach Beendigung des Wickelvorganges kann noch eine weitere Schicht aus einem Reaktionsharz und gegebenenfalls eine Deckschicht aufgebracht werden. Als Alternative offenbart diese ältere Patentanmeldung, den aufzuwickelnden Faserstrang kurz vor dem Aufwickelvorgang mit dem Reaktionsharz zu tränken bzw. zu benetzen. Dazu ist es jedoch erforderlich, den Faserstrang durch ein mit einem Reaktionsharz gefülltes Tauchbecken zu führen, was jedoch bei der Verwendung eines rotierenden Wickelkopfes mit mindestens einer Vorratsrolle für den Faserstrang erhebliche Probleme mit sich bringt.

Der Erfindung liegt deshalb die Aufgabe zugrunde, eine Vorrichtung zur Herstellung eines schlauch- oder rohrartigen Formkörpers aus einem mit mindestens einem Faserstrang verstärkten Reaktionsharz aufzuzeigen, bei der es auch bei der Verwendung eines rotierenden Wickelkopfes möglich ist, ohne großen Aufwand den auf dem Kern aufzuwickelnden Faserstrang mit dem Reaktionsharz zu benetzen bzw. zu tränken. Dabei soll die Vorrichtung so ausgestaltet sein, daß auch gleichzeitig zwei oder mehr mit dem Reaktionsharz getränkte bzw. benetzte Faserstränge aufgewickelt werden können.

Zur Lösung dieser Aufgabe wird gemäß der Erfindung bei einer Vorrichtung der eingangs beschriebenen Gattung vorgeschlagen, daß der Wickelkopf einen Ring aufweist, dessen Innenwandung mindestens eine umlaufende und über mindestens eine Leitung mit dem Reaktionsharz befüllbare Nut besitzt, in deren Boden mindestens ein radialer, der Zuführung des Faserstranges dienender Kanal mündet.

Durch diese Ausgestaltung der Vorrichtung wird der zu wickelnde Faserstrang durch die mit dem Reaktionsharz gefüllte Nut mit dem Reaktionsharz durchtränkt bzw. benetzt, so daß das Aufbringen mindestens einer getrennten Schicht aus dem Reaktionsharz auf den Kern nicht mehr erforderlich ist. In Abhängigkeit vom Durchmesser des Ringes des Wickelkopfes können dabei acht oder mehr Vorratsrollen mit Fasersträngen vorgesehen und gleichzeitig mit dem Reaktionsharz durchtränkt bzw. benetzt werden. Das Reaktionsharz wird während der Rotation des Ringes in die Nut eingeleitet. Durch die Drehung ist dabei sichergestellt, daß das Reaktionsharz die Nut nicht unbeabsichtigt verläßt.

Weitere Merkmale einer Vorrichtung gemäß der Erfindung sind in den Ansprüchen 2 bis 7 offenbart.

Die Erfindung wird nachfolgend anhand eines in einer Zeichnung in stark vereinfachter Weise dargestellten Ausführungsbeispieles näher erläutert. Dabei zeigen
- Fig. 1: eine Aufrißdarstellung einer Vorrichtung gemäß der Erfindung und
- Fig. 2: einen Schnitt durch einen Wickelkopf.

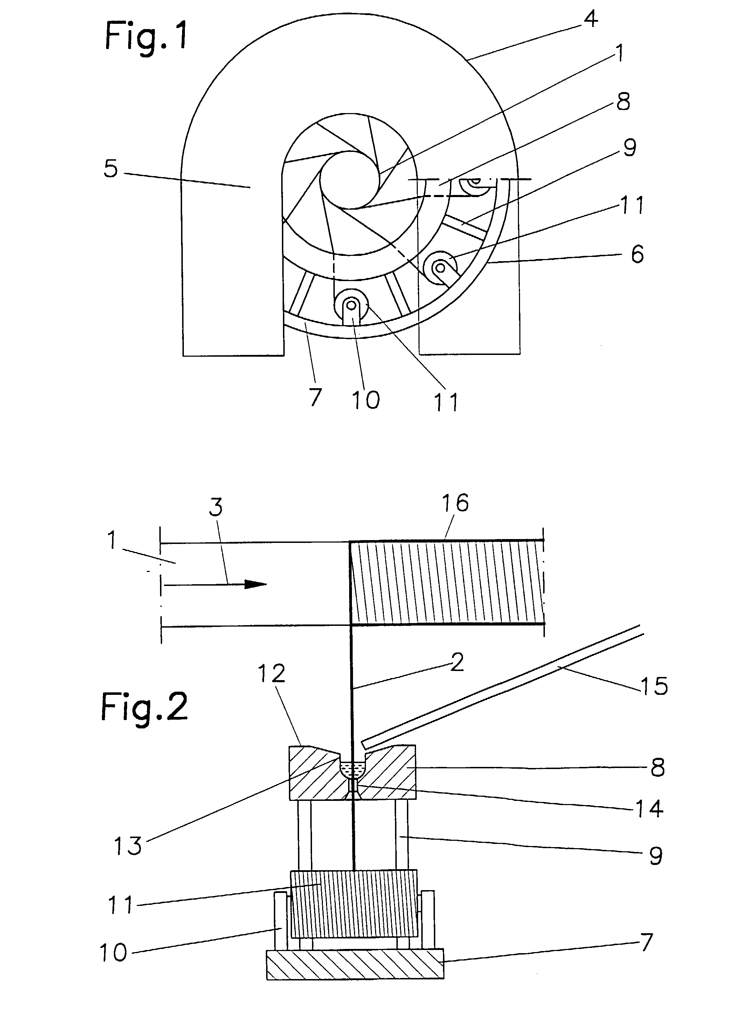

In den Fign. 1 und 2 der Zeichnung ist zunächst ein Kern 1 gezeigt, der aus einem mit einem Stützmedium, beispielsweise Druckluft, beaufschlagten Folienschlauch besteht. Dabei ist der Druck des Stützmediums so bemessen, daß auf den Kern 1 mindestens ein Faserstrang 2 aufgewickelt werden kann. Mittels einer an sich bekannten, in der Zeichnung nicht dargestellten Transporteinrichtung wird der Kern 1 in Richtung des Pfeiles 3 bewegt, wobei die Geschwindigkeit dieser Bewegung entsprechend den Fertigungsparametern einstellbar ist. Mittels der nicht gezeichneten Transporteinrichtung wird nun der Kern 1 durch eine Vorrichtung 4 gemäß der vorliegenden Erfindung bewegt.

Diese Vorrichtung 4 besteht aus einem Gehäuse 5, welches an zumindest einer Stirnfläche geöffnet werden kann. In diesem Gehäuse 5 ist ein Wickelkopf 6 drehbar gelagert. Dieser Wickelkopf 6 stützt sich beispielsweise über eine äußeren Laufring 7 auf im Gehäuse 5 angeordneten, jedoch in der Zeichnung nicht dargestellten Laufrollen ab. Über einen ebenfalls nicht gezeichneten Antrieb, der entweder an dem Laufring 7 oder den Laufrollen angreift, kann der Wickelkopf 6 mit einer frei wählbaren, voreinstellbaren Drehzahl pro Zeiteinheit in Drehbewegung gesetzt werden.

Innerhalb des Laufringes 7 ist ein weiterer Ring 8 angeordnet, der über radiale Streben 9 mit dem Laufring 7 verbunden ist. Ferner trägt der Laufring 7 im dargestellten Ausführungsbeispiel insgesamt acht Halterungen 10, von denen jedoch in der Fig. 1 nur drei Halterungen 10 zu erkennen sind. Jede Halterung 10 dient zur Aufnahme einer Vorratsrolle 11 aus einem Faserstrang, beispielsweise Glasfaserstrang. In Abhängigkeit von der Wickeltechnik und/oder dem Durchmesser des herzustellenden Formkörpers 16 können bedarfsweise auch mehr oder weniger Halterungen 10 für Vorratsrollen 11 vorgesehen sein.

In die innere Mantelfläche 12 des Ringes 8 ist eine umlaufende Nut 13 eingearbeitet, von der jeweils ein Kanal 14 zu einer Halterung 10 und damit zu einer Vorratsrolle 11 führt. Der Querschnitt jedes Kanales 14 ist dabei so bemessen, daß derselbe einen Faserstrang 2 einer Vorratsrolle 11 weitgehend dichtend aufnehmen kann. Bedarfsweise können im Kanal 14 noch besondere Dichtelemente vorgesehen sein, die jedoch in der Zeichnung der Einfachheit halber nicht dargestellt sind.

Oberhalb der Nut 13 und damit innerhalb des Ringes 8 endet eine Leitung 15, über die ein vorgemischtes Reaktionsharz in die Nut 13 eingeleitet werden kann. Das Einleiten des Reaktionsharzes in die Nut 13 erfolgt jedoch erst dann, wenn der Wickelkopf 6 in Drehung versetzt wurde.

In Abänderung der gewählten Darstellung ist es möglich, zwei oder mehr Leitungen 15 zur Zuführung des Reaktionsharzes vorzusehen. Dabei ist es grundsätzlich möglich, über getrennte Leitungen 15 die einzelnen Komponenten des Reaktionsharzes in die Nut 13 einzuleiten. Um die getrennt in der Nut 13 eingeleiteten Komponenten des Reaktionsharzes zu vermeiden, sind dann in der Nut 13 seitliche, als Prallwände ausgebildete Mischelemente vorgesehen, die jedoch in der Zeichnung nicht dargestellt sind. Bei einer solchen Ausgestaltung muß jedoch das vorgegebene Mischungsverhältnis der einzelnen Komponenten des Reaktionsharzes sichergestellt sein. Dies kann mittels Dosierpumpen oder dgl. erfolgen. Auch die Zuführung des fertigen Reaktionsharzes wird in vorteilhafter Weise über die Leitung 15 mittels einer Dosierpumpe vorgenommen. Dabei muß jedoch immer sichergestellt sein, daß die Nut 13 niemals so viel Reaktionsharz erhält, daß dasselbe aus der Nut 13 austreten kann. Dies bedeutet, daß sich der Oberflächenspiegel des in der Nut 13 befindlichen Reaktionsharzes immer um einen vorgegebenen Betrag unterhalb der Außenkanten der Nut 13 befindet. Schließlich sei auch noch darauf hingewiesen, daß zwei der beschriebenen Vorrichtungen 4 hintereinander angeordnet sein können, wobei die Wickelköpfe 6 derselben in vorteilhafter Weise eine unterschiedliche Drehrichtung aufweisen, was eine sogenannte Kreuzwicklung ergibt. Zur Erzielung einer solchen Kreuzwicklung kann der Wickelkopf 6 eine in axialer Richtung des Kernes 1 hin- und hergehende Bewegung ausführen, deren Hub in Abhängigkeit von Durchmesser des zu fertigenden bzw. zu wickelnden Formkörpers 16 etwa 200 bis 2000 m beträgt.

Für die Erläuterung der Arbeitsweise der vorbeschriebenen Vorrichtung wird nun davon ausgegangen, daß vor Beginn der Fertigung alle benötigten Faserstränge 2 von ihren Vorratsrollen 11 abgezogen, durch einen Kanal 14 geführt und mit ihren freien Enden auf den Kern 1 gesichert wurden. Jetzt wird der Drehantrieb des Wickelkopfes 6 angeschaltet, was dazu führt, daß die Faserstränge 2 um den Kern 1 aufgewikkelt werden. Gleichzeitig mit dem Anschalten dieses Drehantriebes wird auch das Reaktionsharz über die Leitung 15 in den Kanal 13 eingefüllt, welches sich dort aufgrund seiner Konsistenz verhältnismäßig rasch und gleichmäßig verteilt. Spätestens dann, wenn sich so viel Reaktionsharz in der Nut 13 befindet, daß die Faserstränge 3 ausreichend mit demselben durchtränkt bzw. benetzt werden, wird die Transporteinrichtung für den Kern 1 angeschaltet, so daß jetzt die mit dem Reaktionsharz durchtränkten bzw. benetzten Faserstränge 2 spiralförmig auf den Kern 1 aufgewickelt werden, wie dies die Fig. 2 der Zeichnung erkennen läßt. Am Ausgang bzw. an der offenen Seite der Nut 13 können besondere, als Schlitze, Löcher oder Walzen ausgebildete, in der Zeichnung allerdings nicht dargestellte Abstreifer vorgesehen sein, die sicherstellen, daß von den Fasersträngen 2 nicht zuviel Reaktionsharz mit ausgeschleppt wird.

Bei den sich überlagernden Bewegungen vom Kern 1 und Fasersträngen 2 wird auf den Kern 1 ein schlauch- bzw. rohrartiger Formkörper 16 erzeugt, dessen Wandstärke von der Anzahl der Faserstränge, der Drehzahl des Wickelkopfes 6 und der Vorschubgeschwindigkeit des Kernes 1 abhängig ist. Dabei erfolgt die Fertigung kontinuierlich, so daß ein "endloser" Formkörper 16 entsteht.

Soll die Fertigung des Formkörpers 16 beendet werden, wird zunächst die Zufuhr des Reaktionsharzes abgestellt. Der Wickelkopf 7 dreht sich dann jedoch noch weiter und die Zuführung der Faserstränge 2 bzw. der Wickelvorgang erfolgt so lange, bis das in der Nut 13 noch befindliche Reaktionsharz aufgebraucht ist. Ist dies sichergestellt, wird der Wickelvorgang abgebrochen und die Fertigung ist beendet. Falls erforderlich, werden jetzt die Vorratsrollen 11 erneuert.

Der auf diese Art und Weise gebildete schlauch- bzw. rohrartige Formkörper 16 kann anschließend mit einer Deckfolie versehen und durch Abflachung in Längsrichtung auf einer nicht dargestellten Trommel als sogenanntes Naßlaminat aufgewickelt oder quer zur Längsrichtung gefaltet werden. Ein solcher Formkörper 16 ist dann beispielsweise zur Sanierung von Kanalrohren verwendbar, wobei erst nach dem Einziehen des schlauchartigen Formkörpers in das Kanalrohr die Aushärtung erfolgen darf. Es ist jedoch auch möglich, den gewickelten Formkörper 16 sofort hinter der Vorrichtung 4, beispielsweise in einer besonderen Kammer, aushärten zu lassen, so daß dann das Formteil 16 rohrartig ist und in beliebig lange Formteilstücke unterteilt werden kann.

In Abänderung des erläuterten Ausführungsbeispieles ist es möglich, an der inneren Mantelfläche des Ringes 18 zwei oder mehr Nuten 13 vorzusehen, die dann über getrennte Leitungen 15 mit Reaktionsharz befüllt werden. Bedarfsweise können diese Nuten 13 dann auch die einzelnen Komponenten des Reaktionsharzes enthalten, die dann beim Wickelvorgang auf dem Kern 1 miteinander in Berührung kommen und reagieren können. Dies setzt selbstverständlich voraus, daß auch den weiteren Nuten 13 Kanäle 14 zugeordnet sind, durch die ebenfalls Faserstränge 2 geführt werden. Bedarfsweise kann auf den Kern 1 vor dem Beginn des Wickelvorganges eine Gelcoatschicht oder eine Vliesschicht aufgebracht werden. Auch nach dem Wickelvorgang ist es möglich, auf den Formkörper 16 noch eine Topcoatschicht aufzubringen.

## Patentansprüche

1. Vorrichtung zur Herstellung eines schlauch- oder rohrartigen Formkörpers aus einem mit mindestens einem Faserstrang verstärkten Reaktionsharz, bestehend aus mindestens einem um einen in axialer Richtung verschiebbaren Kern rotierenden Wickelkopf mit mindestens einer Vorratsrolle für den Faserstrang,
dadurch gekennzeichnet,
daß der Wickelkopf (6) einen Ring (7) aufweist, dessen Innenwandung (12) mindestens eine umlaufende und über mindestens eine Leitung (15) mit dem Reaktionsharz befüllbare Nut (13) besitzt, in deren Boden mindestens ein radialer, der Zuführung des Faserstranges (2) dienender Kanal (14) mündet.

2. Vorrichtung nach Anspruch 1,
dadurch gekennzeichnet,
daß der Ring (7) mit mindestens zwei umlaufenden Nuten (13) versehen und jeder Nut (13) eine Leitung (15) für das Reaktionsharz zugeordnet ist.

3. Vorrichtung nach Anspruch 2,
dadurch gekennzeichnet,
daß die Nuten (13) einen unterschiedlich großen radialen Abstand von der Drehachse des Ringes (7) aufweisen.

4. Vorrichtung nach mindestens einem der Ansprüche 1 bis 3,
dadurch gekennzeichnet,
daß die Leitung (15) aus getrennten Zufuhrleitungen für die einzelnen Komponenten des Reaktionsharzes gebildet ist.

5. Vorrichtung nach mindestens einem der Ansprüche 1 bis 4,
dadurch gekennzeichnet,
daß in der Nut (13) als Prallwände ausgebildete Mischelemente angeordnet sind.

6. Vorrichtung nach mindestens einem der Ansprüche 1 bis 5,
dadurch gekennzeichnet,
daß am Ausgang der Nut (13) für jeden Faserstrang (2) ein Abstreifer vorgesehen ist.

7. Vorrichtung nach mindestens einem der Ansprüche 1 bis 6,
dadurch gekennzeichnet,
daß der Wickelkopf (6) in axialer Richtung der Kernes (1) hin- und herbewegbar geführt ist.

## Claims

1. Device for manufacturing a hose-type or tubular mould body made from a reaction resin reinforced with at least one fibrous strand, consisting of at least one winding head rotating around a core displaceable in an axial direction with at least one supply roller for the fibrous strand, characterised in that the winding head (6) has a ring (7), the inner wall (12) of which has a circumferential groove (13) that can be filled via at least one duct (15) with the reaction resin, into the floor of which groove at least one radial channel (14) serving the admission of the fibrous strand (2) enters.

2. Device according to claim 1 characterised in that the ring (7) is fitted with at least two circumferential grooves (13) and to each groove (13) a duct (15) for the reaction resin is allocated.

3. Device according to claim 2 characterised in that the grooves (13) have a different sized radial clearance from the rotational axis of the ring (7).

4. Device according to at least one of the claims 1 to 3 characterised in that the duct (15) is formed from separate supply ducts for the individual components of the reaction resin.

5. Device according to at least one of the claims 1 to 4 characterised in that mixing elements constructed as rebounding walls are arranged in the groove (13).

6. Device according to at least one of the claims 1 to 5 characterised in that a stripper is provided at the outlet of the groove (13) for each fibrous strand (2).

7. Device according to at least one of the claims 1 to 6 characterised in that the winding head (6) is moved to and fro in the axial direction of the core (1).

## Revendications

1. Dispositif de fabrication d'un corps profilé du genre d'un tuyau ou d'un tube, constitué d'une résine de réaction renforcée par au moins un écheveau de fibres, composé d'au moins une tête d'enroulement tournant autour d'un noyau déplacable en direction axiale, avec au moins un rouleau de stockage pour l'écheveau de fibres,
caractérisé en ce que
la tête d'enroulement (6) présente un anneau (7) dont la paroi intérieure (12) comporte au moins une gorge (13) de pourtour et susceptible d'être remplie de la résine de réaction par l'intermédiaire d'au moins une conduite (15), gorge dans le fond de laquelle débouche au moins un canal (14) radial servant à l'amenée de l'écheveau de fibres (2).

2. Dispositif selon la revendication 1, caractérisé en ce que l'anneau (7) est muni d'au moins deux gorges (13) de pourtour et à chaque gorge (13) est associée une conduite (15) pour la résine de réaction.

3. Dispositif selon la revendication 2, caractérisé en ce que les gorges (13) présentent un espacement radial de valeur différente par rapport à l'axe de rotation de l'anneau (7).

4. Dispositif selon au moins l'une des revendication 1 à 3, caractérisé en ce que la conduite (15) est constituée de conduites d'amenée séparées, pour les différents composants de la résine de réaction.

5. Dispositif selon au moins l'une des revendications 1 à 4, caractérisé en ce que des éléments de mélange, réalisés sous la forme de parois d'impact, sont disposés dans la gorge (13).

6. Dispositif selon au moins l'une des revendications 1 à 5, caractérisé en ce qu'à la sortie de la gorge (13) est prévu un racleur pour chaque écheveau de fibres (2).

7. Dispositif selon au moins l'une des revendications 1 à 6, caractérisé en ce que la tête d'enroulement (6) est déplacable dans un sens et dans l'autre, dans la direction axiale du noyau (1).
